# DEMANDE DE BREVET EUROPEEN

(11) **EP 2 246 822 A1**
(43) Date de publication de la demande: **03.11.2010**
(21) Numéro de dépôt: 10305412.8
(22) Date de dépôt: 20.04.2010
(51) Int. Cl.: G07B 15/02

(54) **Procédé de gestion d'un système centralisé de paiement de stationnement et système centralisé de paiement de stationnement**

(30) Priorité: 29.04.2009 FR 0952843
(71) Demandeur: PARKEON, 75015 Paris (FR)
(72) Inventeur: Masson, François, 25770, Serre Les Sapins (FR); Croze, Emmanuel, 25440, Charnay (FR)
(74) Mandataire: Jacobson, Claude

(57) **Abrégé**

Ce procédé de gestion d'un système (2) centralisé de paiement de stationnement, ledit système (2) comprenant au moins un horodateur (6) et un serveur de centralisation (4) des paiements, le ou chaque horodateur (6) permettant le paiement de places de stationnement situées dans une zone de paiement (44) correspondante et étant propre à créer des données de paiement des places de stationnement et à les enregistrer dans un fichier de transactions de paiement, et chaque horodateur (6) communiquant via une première liaison (12) avec le serveur de centralisation (4), est **caractérisé en ce qu**'il comporte un mode nominal de fonctionnement, où le ou chaque horodateur (6) émet le fichier de transactions seulement lorsqu'une condition parmi des conditions d'émission, indépendantes de la seule création de données de paiement, est vérifiée, afin de réduire sa consommation d'énergie.

## Description

La présente invention concerne un procédé de gestion d'un système centralisé de paiement de stationnement, ledit système comprenant au moins un horodateur et un serveur de centralisation des paiements, le ou chaque horodateur permettant le paiement de places de stationnement situées dans une zone de paiement correspondante et étant propre à créer des données de paiement des places de stationnement et à les enregistrer dans un fichier de transactions de paiement, et chaque horodateur communiquant via une première liaison avec le serveur de centralisation.

L'invention concerne également un système centralisé de paiement de stationnement, du type comprenant au moins un horodateur, un serveur de centralisation des paiements et des moyens d'échange de données via une première liaison entre le serveur de centralisation et le ou chaque horodateur, le ou chaque horodateur comportant des moyens de réception d'un paiement pour des places de stationnement dans une zone de paiement correspondante, des moyens de création de données de paiement des places de stationnement et des moyens d'enregistrement desdites données de paiement dans un fichier de transactions de paiement.

Généralement, les places de stationnement pour un système centralisé de paiement de stationnement sont repérées par un identifiant alpha-numérique marqué au sol. Lorsqu'un usager gare son véhicule automobile sur une place de stationnement libre, il relève l'identifiant de la place où il a garé son véhicule, puis se dirige vers un horodateur voisin. II paie alors le montant correspondant à la durée de stationnement souhaitée, en précisant l'identifiant de la place sur laquelle son véhicule est stationné. L'usager n'a pas besoin de retourner ensuite à son véhicule pour afficher sa preuve de paiement.

La surveillance de paiements de stationnement est effectuée par vérification de l'existence d'une transaction de paiement valide pour chaque identifiant de place occupée par un véhicule.

Dans un procédé d'échange de données de l'état de la technique, lorsqu'une transaction de paiement est effectuée sur un horodateur, les données de la transaction sont immédiatement transmises par l'horodateur au serveur. Chaque horodateur envoie également périodiquement un message de signalement au serveur de centralisation, afin d'indiquer qu'il est toujours opérationnel. Le procédé d'échange de données de l'état de la technique permet de connaître à chaque instant les horodateurs opérationnels et de garantir que les informations nécessaires à la surveillance de l'acquittement des paiements de stationnement sont toujours disponibles depuis le serveur.

Toutefois, un tel procédé présente l'inconvénient d'être très consommateur d'énergie pour chaque horodateur.

Le but de l'invention est donc de réduire la consommation d'énergie pour chaque horodateur, tout en garantissant que les informations nécessaires à la surveillance de l'acquittement des paiements de stationnement sont toujours disponibles.

A cet effet, l'invention a pour objet un procédé de gestion du type précité, **caractérisé en ce qu**'il comporte un mode nominal de fonctionnement, où le ou chaque horodateur émet le fichier de transactions seulement lorsqu'une condition parmi des conditions d'émission, indépendantes de la seule création de données de paiement, est vérifiée, afin de réduire sa consommation d'énergie, et en ce que, en mode nominal de fonctionnement, le ratio entre le nombre de fichiers de transactions émis et le nombre de transactions de paiement est strictement inférieur à 1.

Suivant d'autres modes de réalisation, le procédé comprend une ou plusieurs des caractéristiques suivantes, prises isolément ou suivant toutes les combinaisons techniquement possibles :
- des échanges de fichiers de transaction entre le ou chaque horodateur et le serveur de centralisation sont au moins partiellement apériodiques,
- les conditions d'émission comprennent la réception d'une requête du serveur de centralisation,
- le ou chaque horodateur est toujours dans un mode parmi le mode nominal et un mode de surveillance de l'acquittement des paiements de stationnement, ledit mode de surveillance étant activé sur une requête d'un opérateur, et dans le mode de surveillance, le fichier de transactions est transmis au serveur de centralisation en fonction de la création des données de paiement,
- le procédé comporte les étapes consistant en :
- la formulation par un opérateur d'une requête de surveillance de l'acquittement des paiements de stationnement dans une zone de surveillance,
- l'envoi par chaque horodateur, situé dans la zone de surveillance et ayant reçu du serveur de centralisation la requête de surveillance, de son fichier de transactions au serveur de centralisation,
- le passage, sur commande du serveur de centralisation, de chaque horodateur ayant transmis son fichier de transactions dans le mode de surveillance.
- les conditions d'émission comprennent des conditions secondaires consistant en :
- l'horodateur est connecté à un serveur externe au système de paiement,
- l'horodateur reçoit une transaction de paiement pour une place en dehors de sa zone de paiement, et
- au moins une transaction de paiement est contenue dans le fichier de transactions depuis une durée supérieure à un temps prédéterminé.

L'invention a également pour objet un système centralisé de paiement de stationnement du type précité, **caractérisé en ce que** le ou chaque horodateur est propre à émettre un message seulement lorsqu'une condition parmi des conditions d'émission, indépendantes de la seule création des données de paiement, est vérifiée, afin de réduire sa consommation d'énergie, en ce que, en mode nominal de fonctionnement, le ratio entre le nombre de fichiers de transactions émis et le nombre de transactions de paiement est strictement inférieur à 1.

Suivant d'autres modes de réalisation, le système comprend une ou plusieurs des caractéristiques suivantes, prises isolément ou suivant toutes les combinaisons techniquement possibles :
- chaque horodateur est alimenté par une batterie autonome,
- chaque horodateur comporte des moyens de recharge par énergie solaire de la batterie autonome,
- chaque horodateur est apte à communiquer avec un serveur externe via la première liaison et le serveur de centralisation, ledit serveur externe étant de préférence un serveur bancaire,
- le système comprend un ordinateur portable utilisé par un opérateur et communiquant avec le serveur de centralisation via une deuxième liaison.

L'invention et ses avantages seront mieux compris à la lecture de la description qui va suivre, donnée uniquement à titre d'exemple, faite en référence aux dessins annexés, sur lesquels :
- la figure 1 est une représentation schématique d'un système centralisé de paiement de stationnement selon l'invention,
- la figure 2 est un organigramme de fonctionnement de l'émission d'un fichier de transactions de paiement d'un horodateur à un serveur de centralisation, et
- la figure 3 est un organigramme de fonctionnement d'une procédure de surveillance de l'acquittement des paiements de stationnement.

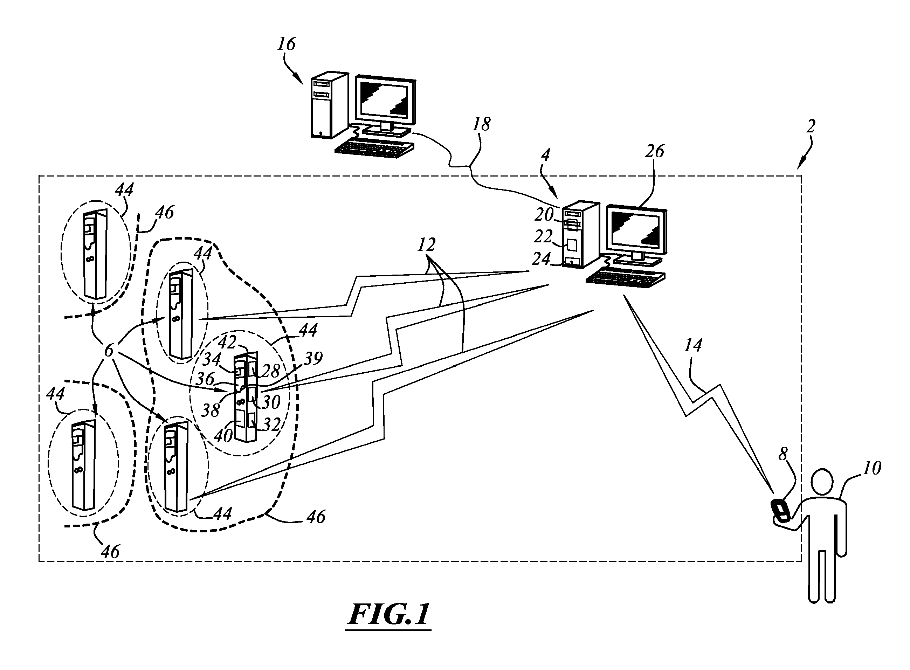

Sur la figure 1, le système centralisé 2 de paiement de stationnement comprend un serveur de centralisation 4 des paiements, une pluralité d'horodateurs 6 et un ordinateur portable 8 utilisé par un opérateur 10. Cet ordinateur portable 8 est de préférence miniature et constitue un assistant personnel connu sous l'acronyme de PDA (Personal Digital Assistant en anglais). Chaque horodateur 6 communique avec le serveur de centralisation 4 via une première liaison de données 12 et l'ordinateur portable 8 communique avec le serveur de centralisation 4 via une deuxième liaison 14 sans fil. La première liaison 12 est, par exemple, une liaison radioélectrique.

Un serveur externe 16 communique avec le serveur de centralisation 4 via une troisième liaison 18. Le serveur externe 16 est, par exemple, un serveur bancaire, destiné à autoriser des transactions de paiement dans le cas d'un paiement par carte bancaire depuis un horodateur. La troisième liaison 18 est, par exemple, une liaison filaire.

Chaque horodateur 6 est apte à communiquer avec le serveur externe 16 via la première liaison 12 sans fil et le serveur de centralisation 4.

Le serveur de centralisation 4 comporte une unité de traitement 20 de l'information, une mémoire 22, un émetteur-récepteur 24 de données et des moyens d'affichage 26. Le serveur de centralisation 4 est alimenté par un réseau alternatif d'électricité, non représenté.

Chaque horodateur 6 comporte une unité 28 de traitement de l'information, une mémoire 30, un émetteur-récepteur 32 de données et des moyens d'affichage 34. Chaque horodateur 6 comprend également un clavier 36 de saisie, un lecteur de cartes 38 et/ou un monnayeur 39. Le lecteur de cartes 38 est propre à lire des cartes bancaires, par exemple à piste magnétique, ou encore à puce.

Chaque horodateur 6 est alimenté par une batterie 40 autonome, c'est-à-dire non rechargée depuis un réseau d'alimentation. Chaque batterie 40 est connectée à des panneaux solaires 42 pour son rechargement par énergie solaire.

Chaque horodateur 6 couvre géographiquement une zone de paiement 44. Une pluralité de places de stationnement, non représentées, est située dans chaque zone de paiement 44. Les zones de paiement 44 peuvent se recouvrir partiellement les unes entre les autres.

Une zone de surveillance 46 de l'acquittement des paiements de stationnement comprend une pluralité de places de stationnement, sans qu'il y ait de relation imposée avec les zones de paiement 44.

Le PDA 8 comporte une unité de traitement de l'information, une mémoire, un émetteur-récepteur de données et des moyens d'affichage, non représentés.

Chaque horodateur 6 met en oeuvre grâce à son unité 28 de traitement d'information un programme informatique gérant son fonctionnement propre. Ce programme permet notamment d'assurer le paiement à partir d'une carte bancaire et/ou de monnaie introduite dans le monnayeur et de produire des informations de transaction reprenant le numéro de l'emplacement de stationnement ainsi que la durée de stationnement pour laquelle le paiement est effectué. Ces données sont stockées dans un fichier de transaction de paiement dans la mémoire 30 sous la commande de l'unité de traitement 28.

De même, le programme contenu dans l'horodateur assure la gestion des transmissions depuis et vers les serveurs 4 et 16.

Chaque horodateur 6 est dans un mode nominal ou bien dans un mode de surveillance, les deux modes étant exclusifs l'un de l'autre.

Dans le mode nominal, l'horodateur 6 mémorise, pour chaque nouvelle transaction de paiement, les données de paiement correspondantes dans son fichier de transaction sans l'envoyer de manière systématique au serveur de centralisation 4. L'horodateur 6 émet son fichier de transaction seulement lorsqu'une condition parmi des conditions d'émission, indépendantes de la seule création de données de paiement, est vérifiée. Le mode nominal est destiné à réduire la consommation d'énergie en limitant le nombre d'émission des fichiers de transaction.

Dans le mode de surveillance, l'horodateur 6 envoie son fichier de transaction à chaque nouvelle transaction de paiement reçue. L'horodateur 6 entre dans le mode de surveillance uniquement sur requête de l'opérateur 10. Ce mode est destiné à garantir que les informations nécessaires à la surveillance de l'acquittement des paiements de stationnement sont toujours disponibles, lorsque l'opérateur 10 le souhaite. Dès que l'opérateur 10 a achevé la surveillance de l'acquittement des paiements de stationnement, l'horodateur 6 retourne dans le mode nominal, afin de réduire sa consommation d'énergie.

Le serveur 4 fonctionne également sous la commande d'un logiciel assurant le recueil des fichiers de transaction de paiement depuis chacun des horodateurs, ainsi que la transmission sur requête des informations de paiement vers l'ordinateur portable 8 de l'opérateur.

Le PDA 8 fonctionne également sous la commande d'un programme d'ordinateur assurant le recueil des informations saisies par l'opérateur 10, la transmission au serveur de centralisation 4 de la zone de surveillance 46 sélectionnée, ainsi que le traitement et l'affichage d'informations reçues du serveur de centralisation 4.

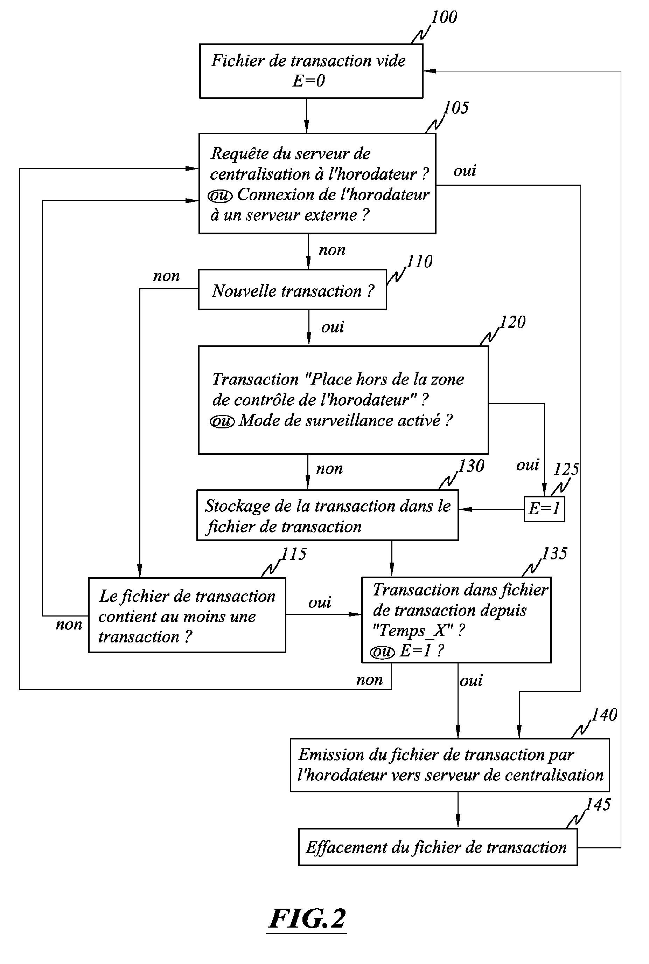

Le fonctionnement d'une procédure d'émission d'un fichier de transaction de paiement de l'horodateur 6 au serveur de centralisation 4 va maintenant être décrit à l'aide de la figure 2. La procédure d'émission comporte une succession d'étapes, elle est mise en oeuvre sous la commande du programme contenu dans l'horodateur 6.

A l'étape 100, le fichier de transaction, stocké dans la mémoire 30 de l'horodateur, est vide. Une variable E est fixée à zéro. L'unité 28 de traitement passe ensuite de l'étape 100 à l'étape 105.

A l'étape 105, l'unité 28 de traitement vérifie, si le serveur de centralisation 4 lui a envoyé une requête, ou bien si elle a établi une connexion avec le serveur externe 16. Si une de ces deux conditions est vérifiée, alors l'unité 28 passe à l'étape 140, sinon elle passe à l'étape 110.

A l'étape 110, l'unité 28 de traitement vérifie si les moyens de réception de paiement 38, 39 ont reçu une nouvelle transaction de paiement pour une place de stationnement. Si aucune nouvelle transaction n'a été détectée, alors l'unité 28 passe à l'étape 115. Sinon, des données de paiement sont créées par l'unité 28 de traitement, et stockées dans la mémoire 30. L'unité 28 passe alors à l'étape 120.

A l'étape 115, l'unité 28 de traitement teste si le fichier de transaction contient des données de paiement pour au moins une transaction. Si le fichier de transaction est vide, alors l'unité 28 retourne à l'étape 105. Sinon elle passe à l'étape 135.

A l'étape 120, l'unité de traitement 28 teste si la transaction reçue par l'horodateur 6 concerne une place située en dehors de sa zone de paiement 44. L'unité de traitement 28 vérifie également si elle est dans le mode de surveillance de l'acquittement des paiements de stationnement. Si une de ces deux conditions est vérifiée, alors l'unité 28 passe à l'étape 125. Sinon, elle passe à l'étape 130.

A l'étape 125, la variable E est fixée à 1, puis l'unité 28 de traitement passe à l'étape 130.

A l'étape 130, l'unité 28 de traitement 28 enregistre les données de paiement pour la transaction en cours dans le fichier de transaction stocké dans la mémoire 30. Lorsque l'enregistrement des données est terminé, l'unité de traitement 28 passe à l'étape 135.

A l'étape 135, l'unité de traitement 28 teste si les données de paiement pour la transaction la plus ancienne sont présentes dans le fichier de transaction depuis une durée supérieure à une valeur Temps_X prédéterminée. Ainsi, l'unité 28 s'assure que les données de paiement ne sont pas stockées dans le fichier de transaction pendant une durée supérieure à une valeur prédéterminée et paramétrable. L'unité 28 de traitement teste également si la variable E est égale à 1. Si une de ces deux conditions est vérifiée, alors l'unité 28 passe à l'étape 140. Sinon, elle retourne à l'étape 105.

A l'étape 140, le fichier de transaction est émis par l'émetteur-récepteur 32 de l'horodateur à destination de l'émetteur-récepteur 24 du serveur de centralisation. A la fin de l'émission, l'unité de traitement 28 passe à l'étape 145.

A l'étape 145, l'unité de traitement 28 efface le contenu du fichier de transaction à l'adresse correspondante dans la mémoire 30. Après effacement du fichier de transaction, l'unité de traitement 28 retourne à l'étape initiale 100.

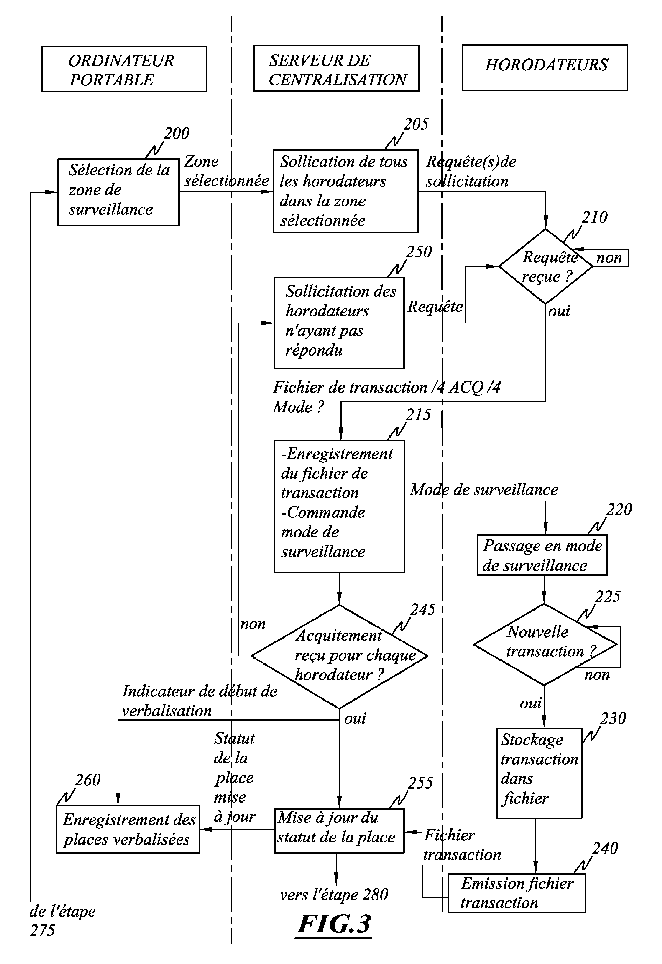

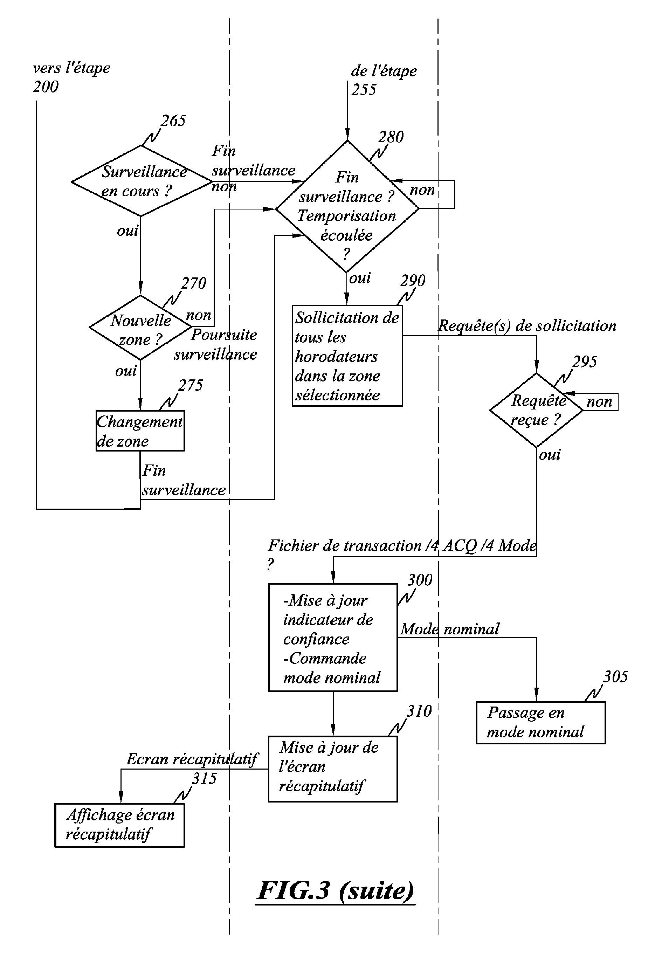

Le fonctionnement d'une procédure de surveillance de l'acquittement des paiements de stationnement va maintenant être décrit à l'aide de la figure 3. La procédure de surveillance est mise en oeuvre suivant les étapes concernées par le serveur de centralisation 4, l'horodateur 6 et l'ordinateur portable 8 utilisé par l'opérateur 10.

A l'étape initiale 200, l'opérateur 10 sélectionne sur le PDA 8 la zone de surveillance 46 qu'il a choisie. La zone de surveillance 46 sélectionnée est ensuite transmise par le PDA 8 au serveur de centralisation 4 pour être traitée à l'étape 205.

A l'étape 205, l'unité de traitement 20 du serveur de centralisation envoie à chaque horodateur 6 de la zone de surveillance 46 sélectionnée une requête de sollicitation. La procédure de surveillance se poursuit à l'étape 210.

A l'étape 210, lorsque la requête de sollicitation a été reçue par l'émetteur-récepteur 32, l'horodateur 6 envoie au serveur de centralisation 4, par l'intermédiaire de son émetteur-récepteur 32, son fichier de transaction, un acquittement de la requête de sollicitation reçue et une demande d'indication de son prochain mode. Ces informations sont traitées à l'étape 215.

A l'étape 215, l'unité de traitement 20 du serveur de centralisation enregistre le fichier de transaction reçu de l'horodateur 6 dans sa mémoire 22. En réponse à la demande d'indication du mode dans lequel l'horodateur 6 doit être, l'unité de traitement 20 envoie à l'horodateur 6 correspondant une commande de passage en mode de surveillance.

A l'étape 220, lorsque l'émetteur-récepteur 32 de l'horodateur a reçu la commande de passage en mode de surveillance émise à l'étape 215, l'unité de traitement 28 passe du mode nominal au mode de surveillance. L'unité 28 passe ensuite de l'étape 220 à l'étape 225.

A l'étape 225, l'unité de traitement 28 vérifie si les moyens de réception de paiement 38, 39 ont reçu un nouveau paiement pour une place de stationnement. Si une nouvelle transaction de paiement a été effectuée, alors l'unité de traitement 28 passe à l'étape 230. Sinon, l'unité 28 reboucle, éventuellement après une temporisation, sur l'étape 225 jusqu'à recevoir une nouvelle transaction de paiement.

A l'étape 230, les données de paiement pour la nouvelle transaction sont enregistrées par l'unité de traitement 28 dans le fichier de transaction stocké dans la mémoire 30 de l'horodateur. L'horodateur 6 passe ensuite à l'étape 240.

A l'étape 240, le fichier de transaction est envoyé par l'émetteur-récepteur 32 de l'horodateur à l'émetteur-récepteur 24 du serveur de centralisation. Le fichier de transaction émis est pris en compte par l'unité de traitement 20 à l'étape 255.

A l'étape 245, l'unité de traitement 20 du serveur de centralisation teste si chaque horodateur 6 situé dans la zone de surveillance 46 sélectionnée a bien envoyé un acquittement pour la requête de sollicitation. Si l'acquittement de la requête n'a pas été reçu pour au moins un horodateur 6, alors l'unité de traitement 20 passe à l'étape 250.

Si un acquittement a bien été reçu pour chaque horodateur 6 situé dans la zone 46 de surveillance, alors l'unité de traitement 20 du serveur de centralisation envoie au PDA 8 un indicateur de début de verbalisation. L'unité de traitement 20 passe ensuite à l'étape 255.

A l'étape 250, l'unité de traitement 20 envoie une nouvelle sollicitation aux horodateurs 6 n'ayant pas répondu à la première sollicitation. La procédure retourne ensuite à l'étape 210.

A l'étape 255, l'unité de traitement 20 met à jour le statut des places de paiement situées dans la zone de paiement 44 pour chaque horodateur 6 qui a envoyé son fichier de transaction à l'étape 240. L'unité 20 envoie le statut mis à jour de chaque place au PDA 8, puis passe à l'étape 280. Les statuts envoyés par le serveur 4 sont traités par le PDA à l'étape 260.

A l'étape 260, l'opérateur 10 détermine, en fonction des statuts mis à jour, quels sont les véhicules automobiles pour lesquels le paiement du stationnement n'a pas été acquitté. L'opérateur 10 rédige un procès-verbal pour chaque véhicule automobile en infraction et enregistre les numéros des places concernées dans son PDA 8.

A l'étape 265, l'unité de traitement de l'ordinateur 8 teste si l'opérateur 10 a mis fin à la surveillance de l'acquittement des paiements de stationnement. Si l'opérateur 10 souhaite, de manière tacite, poursuivre la surveillance alors l'unité de traitement passe à l'étape 270. Si l'opérateur 10 a mis fin à la surveillance, l'unité de traitement du PDA 8 interrompt l'étape 260 et envoie au serveur de centralisation 4 une commande de fin de surveillance, qui est traitée à l'étape 280 par l'unité 20.

A l'étape 270, l'unité de traitement du PDA 8 teste si l'opérateur 10 a demandé un changement de zone de surveillance 46. Dans ce cas, l'unité de traitement de l'ordinateur 8 passe à l'étape 275. Sinon, l'unité de traitement de l'ordinateur 8 envoie au serveur de centralisation 4 un message de poursuite de surveillance, qui sera traité à l'étape 280 par l'unité de traitement 20, et l'étape 260 se poursuit.

A l'étape 275, l'ordinateur 8 traite le changement de zone de surveillance 46, et dans un premier temps envoie au serveur de centralisation 4 la commande de fin de surveillance, qui sera prise en compte à l'étape 280 par l'unité de traitement 20. Dans un deuxième temps, l'unité de traitement du PDA 8 passe de l'étape 280 à l'étape initiale 200, afin de prendre en compte une nouvelle zone de surveillance 46 choisie par l'opérateur 10.

A l'étape 280, l'unité de traitement 20 vérifie si l'ordinateur portable 8 a envoyé la commande de fin de surveillance. Sinon, elle teste si une temporisation paramétrable s'est écoulée depuis la réception de la zone de surveillance 46 sélectionnée à l'étape 205. Si la commande de fin de surveillance a été reçue ou bien si la temporisation s'est écoulée, alors l'unité 20 passe à l'étape 290, afin d'interrompre le mode de surveillance. Sinon l'unité de traitement 20 reboucle sur l'étape 280, en attendant la réception d'une commande de fin de surveillance ou bien la fin de la temporisation.

A l'étape 290, l'unité de traitement 20 envoie une requête de sollicitation à destination de tous les horodateurs 6 situés dans la zone de surveillance 46 sélectionnée. Cette requête est traitée à l'étape 295 par l'unité de traitement 28 de chaque horodateur 6.

A l'étape 295, chaque unité de traitement 28 des horodateurs situés dans la zone de surveillance 46 vérifie si une requête de sollicitation a été reçue de la part du serveur de centralisation 4. Si une requête a été reçue, alors l'unité de traitement 28 envoie au serveur de centralisation 4 son fichier de transaction et demande le nouveau mode choisi. Ce nouveau message est traité à l'étape 300 par l'unité de traitement 20. Sinon l'unité de traitement 28 reboucle sur l'étape 295, en attendant de recevoir une requête de sollicitation.

A l'étape 300, l'unité de traitement 20 enregistre le fichier de transaction reçu de chaque horodateur 6, met à jour un indicateur de confiance qui représente le nombre d'horodateurs 6 ayant acquitté la requête de sollicitation en fonction du nombre d'horodateurs 6 dans la zone de surveillance 46 sélectionnée. L'unité de traitement 20 envoie ensuite une commande de passage en mode nominal à chaque horodateur 6 ayant acquitté la requête de sollicitation. La commande de passage en mode nominal est traitée à l'étape 305 pour chaque unité de traitement 28 concernée. L'unité de traitement 20 passe de l'étape 300 à l'étape 310.

A l'étape 305, l'unité de traitement 28 passe en mode nominal après avoir reçu la commande de passage en mode nominal envoyé par le serveur de centralisation 4.

A l'étape 310, l'unité de traitement 20 crée un écran récapitulatif de la surveillance de l'acquittement des paiements de stationnement. L'unité de traitement 20 envoie à l'ordinateur portable 8 un message contenant l'écran récapitulatif, qui est traité à l'étape 315.

A l'étape 315, l'unité de traitement du PDA 8 reçoit le message contenant l'écran récapitulatif et l'affiche ensuite sur l'écran du PDA 8.

Ainsi, le procédé selon l'invention permet de réduire la consommation d'énergie pour chaque horodateur 6 en limitant le nombre de messages envoyés par chaque horodateur 6 se trouvant dans le mode nominal.

Ce procédé permet également de garantir que les informations nécessaires à la surveillance de l'acquittement des paiements de stationnement sont toujours disponibles, puisque dans ce cas chaque horodateur 6 gérant des places de stationnement appartenant à la zone de surveillance 46 sélectionnée passe dans un mode de surveillance, où il envoie son fichier de transaction dès qu'il a reçu une nouvelle transaction de paiement.

Il est plus avantageux que la première liaison 12 soit une liaison radioélectrique ce qui permet l'implantation de l'horodateur 6 à un emplacement sans réseau filaire de télécommunications.

Toutefois, il est prévu en variante que la première liaison 12 de données est une liaison filaire.

## Revendications

1. Procédé de gestion d'un système (2) centralisé de paiement de stationnement, ledit système (2) comprenant au moins un horodateur (6) et un serveur de centralisation (4) des paiements, le ou chaque horodateur (6) permettant le paiement de places de stationnement situées dans une zone de paiement (44) correspondante et étant propre à créer des données de paiement des places de stationnement et à les enregistrer dans un fichier de transactions de paiement, et chaque horodateur (6) communiquant via une première liaison (12) avec le serveur de centralisation (4), **caractérisé en ce qu'**il comporte un mode nominal de fonctionnement, où le ou chaque horodateur (6) émet le fichier de transactions seulement lorsqu'une condition parmi des conditions d'émission, indépendantes de la seule création de données de paiement, est vérifiée, afin de réduire sa consommation d'énergie, et **en ce que**, en mode nominal de fonctionnement, le ratio entre le nombre de fichiers de transactions émis et le nombre de transactions de paiement est strictement inférieur à 1.

2. Procédé selon la revendication 1, **caractérisé en ce que** des échanges de fichiers de transaction entre le ou chaque horodateur (6) et le serveur de centralisation (4) sont au moins partiellement apériodiques.

3. Procédé selon l'une quelconque des revendications précédentes, **caractérisé en ce que** les conditions d'émission comprennent la réception d'une requête du serveur de centralisation (4).

4. Procédé selon la revendication 3, **caractérisé en ce que** le ou chaque horodateur (6) est toujours dans un mode parmi le mode nominal et un mode de surveillance de l'acquittement des paiements de stationnement, ledit mode de surveillance étant activé sur une requête d'un opérateur (10), et dans le mode de surveillance, le fichier de transactions est transmis au serveur de centralisation (4) en fonction de la création des données de paiement.

5. Procédé selon la revendication 4, **caractérisé en ce qu'**il comporte les étapes consistant en :
- la formulation par un opérateur d'une requête de surveillance de l'acquittement des paiements de stationnement dans une zone de surveillance (46),
- l'envoi par chaque horodateur (6), situé dans la zone de surveillance (46) et ayant reçu du serveur de centralisation (4) la requête de surveillance, de son fichier de transactions au serveur de centralisation (4)
- le passage, sur commande du serveur de centralisation (4), de chaque horodateur (6) ayant transmis son fichier de transactions dans le mode de surveillance.

6. Procédé selon l'une quelconque des revendications précédentes, **caractérisé en ce que** les conditions d'émission comprennent des conditions secondaires consistant en :
- l'horodateur (6) est connecté à un serveur externe (16) au système (2) de paiement,
- l'horodateur (6) reçoit une transaction de paiement pour une place en dehors de sa zone de paiement (44), et
- au moins une transaction de paiement est contenue dans le fichier de transactions depuis une durée supérieure à un temps prédéterminé (Temps_X).

7. Système centralisé (2) de paiement de stationnement, du type comprenant au moins un horodateur (6), un serveur de centralisation des paiements (4) et des moyens d'échange (24, 32) de données via une première liaison (12) entre le serveur de centralisation (4) et le ou chaque horodateur (6), le ou chaque horodateur (6) comportant des moyens de réception (38, 39) d'un paiement pour des places de stationnement dans une zone de paiement (44) correspondante, des moyens de création (28) de données de paiement des places de stationnement et des moyens d'enregistrement (28, 30) desdites données de paiement dans un fichier de transactions de paiement, **caractérisé en ce que** le ou chaque horodateur (6) est propre, dans un mode nominal de fonctionnement, à émettre un message seulement lorsqu'une condition parmi des conditions d'émission, indépendantes de la seule création des données de paiement, est vérifiée, afin de réduire sa consommation d'énergie, et **en ce que**, en mode nominal de fonctionnement, le ratio entre le nombre de fichiers de transactions émis et le nombre de transactions de paiement est strictement inférieur à 1.

8. Système (2) selon la revendication 7, **caractérisé en ce que** chaque horodateur (6) est alimenté par une batterie (40) autonome.

9. Système (2) selon la revendication 8, **caractérisé en ce que** chaque horodateur (6) comporte des moyens (42) de recharge par énergie solaire de la batterie (40) autonome.

10. Système (2) selon l'une quelconque des revendications 7 à 9, **caractérisé en ce** chaque horodateur (6) est apte à communiquer avec un serveur externe (16) via la première liaison (12) et le serveur de centralisation (4), ledit serveur externe (16) étant de préférence un serveur bancaire.

11. Système (2) selon l'une quelconque des revendications 7 à 10, **caractérisé en ce qu'**il comprend un ordinateur portable (8) utilisé par un opérateur (10) et communiquant avec le serveur de centralisation (4) via une deuxième liaison (14).
